# EUROPÄISCHE PATENTANMELDUNG

(11) **EP 4 637 001 A1**
(43) Veröffentlichungstag der Anmeldung: **22.10.2025**
(21) Anmeldenummer: 24170431.1
(22) Anmeldetag: 16.04.2024
(51) Int. Cl.: H02K 15/00, H02K 3/12, H02K 3/487, H02K 7/18

(54) **VERFAHREN ZUR REPARATUR EINES GENERATORS MIT FORMSPULEN, GENERATOR UND WINDENERGIEANLAGE**

(71) Anmelder: Wobben Properties GmbH, 26607 Aurich (DE)
(72) Erfinder: Volles, Mats, 76189 Karlsruhe (DE)
(74) Vertreter: Eisenführ Speiser

(57) **Zusammenfassung**

Verfahren zur Reparatur eines Generators mit Formspulen, insbesondere eines Generators einer Windenergieanlage mit Formspulen, umfassend die Schritte: Entkoppeln (1010) des ersten und zweiten Anschlusses (18, 19) einer defekten Formspule (11) von zwei weiteren der mehreren Formspulen (10); Abtrennen (1020) des ersten und zweiten Spulenkopfes (14, 16) der defekten Formspule (11); Auftrennen (1030a) eines Nutenverschlusskeils, der eine Nut verschließt, in der ein erster Schenkel (12a) der defekten Formspule (11) eingesetzt ist; Entfernen (1040a) des ersten Schenkels (12a) der defekten Formspule (11) aus der Nut (38); Einsetzen (1050a) eines ersten Schenkels (12a) einer neuen Formspule (13) mit einem elektrischen Leiter aus Kupfer oder Aluminium; Einsetzen (1060a) eines neuen Nutenverschlusskeils (39) in die Nut (38), in welche der erste Schenkel (12a) der neuen Formspule (13) eingesetzt wurde, wobei die Nut (38) durch den neuen Nutenverschlusskeil (39) in Richtung des im Betriebszustand zwischen Stator und Rotor bestehenden Luftspalts verschlossen wird; Einbringen (1070a) von Harz in die Nut, in welche der erste Schenkel (12a) der neuen Formspule (13) eingesetzt wurde; Verbinden (1080) des ersten Schenkels (12a) mit dem zweiten Schenkel (12b); und Koppeln (1090) des ersten und zweiten Anschlusses mit dem ersten Anschluss und zweiten Anschluss der zwei weiteren Formspulen (10).

## Beschreibung

Die Erfindung betrifft ein Verfahren zur Reparatur eines Generators mit Formspulen. Insbesondere betrifft die Erfindung ein Verfahren zur Reparatur eines Generators mit Formspulen für eine Windenergieanlage. Ferner betrifft die Erfindung einen Generator, insbesondere einen Generator für eine Windenergieanlage, und eine Windenergieanlage.

Eine Windenergieanlage ist eine Anlage, die kinetische Energie von Wind in elektrische Energie wandelt und in ein Stromnetz einspeist. Für die Wandlung der kinetischen Energie zur elektrischen Energie umfasst die Windenergieanlage einen Generator mit einem Rotor, der relativ zu einem Stator um eine Drehachse drehbar gelagert ist. In Abhängigkeit der Lage der Drehachse wird zwischen einer horizontalen und einer vertikalen Windenergieanlage unterschieden. Bei der horizontalen Windenergieanlage ist die Drehachse horizontal oder im Wesentlichen horizontal ausgerichtet. Bei der vertikalen Windenergieanlage ist die Drehachse vertikal oder im Wesentlichen vertikal ausgerichtet. Horizontale Windenergieanlagen sind auch als Horizontalachsen-Windenergieanlagen und vertikale Windenergieanlagen sind auch als Vertikalachsen-Windenergieanlagen bekannt.

Moderne Windenergieanlagen betreffen in der Regel sogenannte Horizontalachsen-Windenergieanlagen, bei denen die Drehachse im Wesentlichen horizontal oder um einen spitzen Winkel gegenüber der Drehachse geneigt angeordnet ist. Entsprechend überstreichen die Rotorblätter vorzugsweise eine sich im Wesentlichen senkrecht zur Drehachse erstreckende Rotorfläche. Ferner weisen Windenergieanlagen eine Gondel auf, die um eine im Wesentlichen vertikale Achse drehbar auf einem Turm der Windenergieanlage angeordnet ist.

Der Wind bewirkt in einem Betriebszustand der Windenergieanlage eine Drehbewegung der Rotorblätter, die den Rotor eines Generators, welcher mit den Rotorblättern gekoppelt ist, antreiben. In dem Betriebszustand drehen die Rotorblätter und der Rotor relativ zu einem Stator des Generators. Bedingt durch die Relativbewegung zwischen Rotor und Stator erzeugt der (elektrische) Generator elektrische Energie. In dem Betriebszustand der Windenergieanlage ist die Windenergieanlage am Aufstellort aufgebaut und wird für die Wandlung der kinetischen Energie des Windes in elektrische Energie betrieben.

Windenergieanlagen können getriebelos oder mit einem Getriebe ausgeführt sein. Insbesondere getriebelose Windenergieanlagen weisen Generatoren mit einem großen Durchmesser auf. Es ist durchaus üblich, dass die Generatoren einen Durchmesser von 5 m und mehr aufweisen. Diese Generatoren können als sogenannte Innenläufer oder als sogenannte Außenläufer ausgeführt sein. Bei einem Innenläufer ist der mit den Rotorblättern rotierende Rotor des Generators innerhalb eines feststehenden Stators des Generators angeordnet. Bei einem Außenläufer ist der Rotor außerhalb des Stators angeordnet. Bei dem Außenläufer ist der Stator insbesondere innerhalb des Rotors, vorzugsweise in Bezug zu dem Rotor radial innenliegend angeordnet. Unabhängig von der Art des Generators sind Generatoren üblicherweise an der Gondel, insbesondere einem Maschinenträger, der Windenergieanlage befestigt.

Es sind beispielsweise aus der EP 3 311 471 B1 Generatoren von Windenergieanlagen bekannt, die einen Stator und einen drehbar gelagerten elektrodynamischen Rotor aufweisen. Es sind Statoren bekannt, die mehrere Stränge mit jeweils mehreren Wicklungen aufweisen. Diese Wicklungen werden mit einem isolierten Draht, zum Beispiel aus Kupfer, erzeugt. Hierzu wird in die Nuten des Stators der Draht eines Strangs eingewickelt, sodass ein Strang aus einem durchgängigen Stück des Drahts hergestellt wird.

Ferner sind Formspulen bekannt, die vorgefertigten Windungen eines leitenden Materials entsprechen und direkt in die Nuten eines Stators eingesetzt werden. Die Formspulen weisen über die Statornut hinausragende Anschlüsse auf, mit denen die einzelnen Formspulen durch Löten oder Schweißen miteinander verbunden werden, sodass sich die gewünschte elektrische Verschaltung des gesamten Wicklungsaufbaus ergibt.

Bei einem Defekt wie beispielsweise einem Masseschluss in einem Stator eines Generators einer Windenergieanlage, wird der Generator üblicherweise vollständig demontiert und in ein Werk gebracht. Hierfür ist üblicherweise ein Kran nötig. Die Reparaturarbeiten basieren in aller Regel auf der Vorgehensweise, die auch der Serienproduktion zugrunde liegt.

Bei einem Masseschluss im Stator eines Generators, muss die Nut geöffnet werden und die Isolation wiederhergestellt werden. Hierzu muss die Nut komplett geräumt, d.h. alle Isolationsmaterialen und elektrischen Leiter müssen entfernt und vollständig neu aufgebaut werden. Dabei stellt die abschließende Imprägnierung mit einem Harz eine besondere Herausforderung dar. Zwar werden die Wickelköpfe mit Harz bestrichen, im Betrieb des derart reparierten Generators kann dann aber Feuchtigkeit in die Nut eindringen. Außerdem kann es im Betrieb des reparierten Generators zwischen den elektrischen Leitern und den Blechpakten, welche die Nuten ausbilden, durch die im Generator wirkenden elektromagnetischen Kräfte zu Relativbewegungen kommen, was die Lebensdauer des reparierten Generators minimiert.

Der Erfindung liegt daher die Aufgabe zu Grunde, eine verbesserte Lösung bereitzustellen. Insbesondere ist es eine Aufgabe der vorliegenden Erfindung, einerseits eine kostengünstige Reparatur eines Generators und einer Windenergieanlage zu ermöglichen und andererseits nach der Reparatur des Generators einen Generator und eine Windenergieanlage mit einer verbesserten Lebensdauer bereitzustellen. Insbesondere ist eine Aufgabe der vorliegenden Erfindung eine Reparatur eines Generators und einer Windenergieanlage zu ermöglichen, ohne den Generator vollständig zu demontieren.

Diese Aufgabe wird gemäß einem ersten Aspekt der Erfindung gelöst durch ein Verfahren nach Anspruch 1. Das Verfahren nach Anspruch 1 betrifft ein Verfahren zur Reparatur eines Generators mit Formspulen. Insbesondere betrifft das Verfahren nach Anspruch 1 ein Verfahren zur Reparatur eines Generators mit Formspulen einer Windenergieanlage. Der Generator und/oder die Windenergieanlage können wie eingangs beschrieben ausgebildet sein oder für die eingangs beschrieben Verwendung ausgebildet sein.

Der zu reparierende Generator weist mehrere Formspulen auf, die jeweils durch einen elektrischen Leiter gebildet werden. Jeder elektrische Leiter erstreckt sich zwischen einem ersten Anschluss und einem zweiten Anschluss. Dabei ist der erste Anschluss einer Formspule mit dem zweiten Anschluss einer weiteren Formspule verbunden. Der elektrische Leiter bildet zwei parallel zueinander verlaufende Schenkel, die sich zwischen einem ersten und einem zweiten Spulenkopf erstrecken, durch die die beiden Schenkel miteinander verbunden sind.

Prinzipiell können der erste Anschluss und/oder der zweite Anschluss für eine kraftschlüssige und/oder formschlüssige und/oder stoffschlüssige Verbindung ausgebildet sein. Insbesondere kann es bevorzugt sein, dass der erste Anschluss einer Formspule und der zweite Anschluss einer weiteren Formspule durch eine Schraubenverbindung miteinander verbunden sind. Ergänzend oder alternativ kann es bevorzugt sein, dass der erste Anschluss einer Formspule und der zweite Anschluss einer weiteren Formspule durch eine Steckverbindung miteinander verbunden sind. Ergänzend oder alternativ ist es insbesondere vorgesehen, dass der erste Anschluss einer Formspule und der zweite Anschluss einer weiteren Formspule durch eine Schweißverbindung miteinander verbunden sind.

Sofern der erste und zweite Anschluss mittels einer Schraubenverbindung miteinander verbunden sind, kann es bevorzugt sein, dass der erste und/oder zweite Anschluss Durchgangsbohrungen aufweisen, durch welche Schrauben und/oder Gewindestangen hindurchgeführt werden. Denkbar ist aber auch eine Art Anschlussschuh, in dem der erste und zweite Anschluss aufgenommen mit einer oder mehreren Schrauben miteinander verbunden sind oder werden können. Für eine Steckverbindung kann es bevorzugt sein, dass der erste Anschluss eine Ausnehmung, insbesondere eine Durchgangsbohrung oder dergleichen, und der zweite Anschluss einen Vorsprung aufweist, wobei der Vorsprung in die Ausnehmung greift, so dass der erste und zweite Anschluss miteinander verbunden sind oder werden können.

Ferner weist der Generator ein Blechpaket auf, das mehrere sich in Axialrichtung parallel zur Drehachse des Generators und parallel zueinander zwischen einem ersten Nutende und einem zweiten Nutende erstreckende Nuten aufweist. Die Nuten sind in Bezug auf die Drehachse des Generators in Umfangsrichtung beabstandet angeordnet. Die beiden Schenkel der Formspulen sind jeweils in einer der Nuten eingesetzt, die durch einen Nutenverschlusskeil in Richtung eines im Betriebszustand zwischen Stator und Rotor bestehenden Luftspalts verschlossen sind.

Das erfindungsgemäße Verfahren umfasst in einem ersten Schritt das Entkoppeln der Anschlüsse der defekten Formspule von den benachbarten Formspulen. Der Schritt des Entkoppelns umfasst das Lösen der Verbindung zwischen dem ersten Anschluss der einen Formspule mit dem zweiten Anschluss der weiteren Formspule. Beispielsweise umfasst der Schritt des Entkoppelns ein Lösen der Schraubenverbindung und/oder der Steckverbindung und/oder der Schweißverbindung. Beim Lösen der Schraubenverbindung ist insbesondere vorgesehen, dass eine Schraubenmutter von einer Schraube oder Gewindestange gedreht wird. Beim Lösen der Steckverbindung ist beispielsweise vorgesehen, dass die formschlüssige Verbindung zwischen dem ersten und zweiten Anschluss aufgelöst wird, indem der Vorsprung des einen Anschlusses nicht mehr in die Ausnehmung des anderen Anschlusses greift. Das Lösen einer Schweißverbindung umfasst insbesondere ein Auftrennen der Verbindung zwischen dem ersten und zweiten Anschluss. Das Auftrennen erfolgt beispielsweise durch ein Sägen, Schneiden, Kneifen oder zerspanendes Verfahren. Dieser Schritt ermöglicht somit, die defekte Spule in der für den Betrieb erforderlichen Position des Generators von den weiteren Formspulen zu lösen, um die defekte Formspule in der für den Betrieb erforderlichen Position des Generators auszuwechseln.

In einem weiteren Schritt wird der Spulenkopf der defekten Formspule abgetrennt, um Zugang zu den Schenkeln zu erhalten. Das Abtrennen kann durch ein Schneiden, ein Schleifen oder ein anderes geeignetes Trennverfahren erfolgen. Insbesondere kann es bevorzugt sein, dass für den Schritt des Abtrennens der Spulenköpfe dasselbe Verfahren und/oder Werkzeug verwendet wird, welches für das Entkoppeln des ersten und zweiten Anschlusses der Formspule von den zwei weiteren der mehreren Formspulen verwendet wird. Dieser Schritt erleichtert die Demontage der defekten Formspule.

In einem weiteren Schritt wird ein Nutenverschlusskeil, der eine Nut verschließt, in der ein erster Schenkel der defekten Formspule eingesetzt ist, aufgetrennt, um den Schenkel von der Nut zu lösen. Das Auftrennen erfolgt in bevorzugter Weise mit geeigneten Trennwerkzeugen und/oder -verfahren. Beispielsweise kann das Auftrennen des Nutenverschlusskeils mit einem Stemmeisen erfolgen. Denkbar ist auch, dass der Schritt des Auftrennens durch ein Schneiden mit einem Messer und/oder ein Sägen mit einer Säge erfolgt.

In einem weiteren Schritt wird der erste Schenkel der defekten Formspule aus der Nut entfernt. Hierdurch entsteht Platz für den Einbau eines Schenkels einer neuen Formspule. Der Schritt des Entfernens kann ein Herausschälen und/oder Herausziehen und/oder ein anderes geeignetes Verfahren umfassen. Es kommt in diesem Schritt darauf an, sicherzustellen, dass die Nut beim Entfernen des Schenkels nicht beschädigt wird.

Nachdem der erste Schenkel der defekten Formspule entfernt wurde, wird ein erster Schenkel einer neuen Formspule mit einem elektrischen Leiter, beispielsweise Kupfer oder Aluminium, in die Nut eingesetzt, aus der der erste Schenkel der defekten Formspule entfernt worden ist. Dies stellt sicher, dass die elektrischen Eigenschaften des Generators wiederhergestellt werden bzw. erhalten bleiben und die Leitfähigkeit verbessert wird.

In einem weiteren Schritt wird ein neuer Nutenverschlusskeil in die Nut eingesetzt, in welche der erste Schenkel der neuen Formspule eingesetzt wurde. Die Nut wird hierbei durch den neuen Nutenverschlusskeil in Richtung des Luftspalts zwischen Stator und Rotor verschlossen, welcher im Betriebszustand besteht. Dadurch wird unter anderem sichergestellt, dass die Formspule gegenüber der Umgebung geschützt ist und im Blechpaket gehalten wird.

In einem weiteren Schritt wird Harz in die Nut eingebracht, in welche der erste Schenkel der neuen Formspule eingesetzt wurde. Das Harz dringt in den Raum zwischen dem ersten Schenkel der neuen Formspule und der Wand bzw. dem Boden der Nut ein. Indem das Harz diesen Raum ausfüllt, wird der erste Schenkel der Formspule formschlüssig in der Nut des Blechpakets fixiert.

In einem weiteren Schritt wird der erste Schenkel mit dem zweiten Schenkel verbunden. Dies kann durch Löten, Schweißen oder andere geeignete Verfahren erfolgen. Der zweite Schenkel kann der zweite Schenkel der defekten Formspule sein, der keinen Defekt aufweist. Alternativ kann der zweite Schenkel ein neu eingesetzter zweiter Schenkel der neuen Formspule sein.

In einem weiteren Schritt werden die Anschlüsse der neuen Formspule mit den Anschlüssen der benachbarten Formspulen gekoppelt, um den Stromfluss im Generator wiederherzustellen und die Reparatur abzuschließen.

Das Verfahren hat den Vorteil, dass auch bei reparierten Generatoren durch das eingebrachte Harz deren Wärmeleitfähigkeit und die Isolationseigenschaften verbessert sind. Insbesondere ermöglicht dieses Reparaturverfahren, dass der reparierte Generator durch das eingebrachte Harz eine Wärmeleitfähigkeit und Isolationseigenschaften aufweist, die einem neu hergestellten Generator entsprechen. Somit hat das Reparaturverfahren insbesondere den Vorteil, dass durch das eingebrachte Harz der Generator in den Nuten mit der neu eingesetzten Formspule im Vergleich zu den anderen Nuten keine schlechtere oder zumindest keine wesentlich schlechtere Wärmeleitfähigkeit und Isolationseigenschaften aufweist.

Hinzu hat dieses Reparaturverfahren den Vorteil, dass die Feuchteempfindlichkeit verringert ist und die Lebensdauer eines derart reparierten Generators im Vergleich zu Generatoren, die auf herkömmliche Weise repariert wurden, verbessert ist.

Gemäß diesem Verfahren können die Reparaturarbeiten innerhalb des Generators bzw. des Generatorgehäuses stattfinden. Gegebenenfalls ist hierzu innerhalb des Gehäuses ein Gerüst für die Reparaturarbeiten vorzusehen.

Gemäß einer bevorzugten Ausführungsform umfasst das Verfahren Schritte, um einen zweiten Schenkel der defekten Formspule gegen einen zweiten Schenkel einer neuen Formspule zu ersetzen und um den Generator wieder in einen betriebsfähigen Zustand zu versetzen.

Entsprechend umfasst das Verfahren gemäß dieser bevorzugten Ausführungsform die Schritte: ein Auftrennen eines Nutenverschlusskeils, der eine Nut verschließt, in der ein zweiter Schenkel der defekten Formspule eingesetzt ist; ein Entfernen des zweiten Schenkels der defekten Formspule aus der Nut; ein Einsetzen eines zweiten Schenkels einer neuen Formspule mit einem elektrischen Leiter aus Kupfer; ein Einsetzen eines neuen Nutenverschlusskeils in die Nut, in welche der zweite Schenkel der neuen Formspule eingesetzt wurde, wobei die Nut durch den neuen Nutenverschlusskeil in Richtung des im Betriebszustand zwischen Stator und Rotor bestehenden Luftspalts verschlossen wird; und ein Einbringen von Harz in die Nut, in welche der zweite Schenkel der neuen Formspule eingesetzt wurde.

Die Verfahrensschritte, welche in Bezug auf den zweiten Schenkel der defekten Formspule und den zweiten Schenkel der neuen Formspule durchgeführt werden, können analog zu den Verfahrensschritten ausgeführt werden oder mit den Mitteln ausgeführt werden, wie diese in Bezug auf den ersten Schenkel der defekten Formspule und den ersten Schenkel der neuen Formspule zuvor beschrieben wurden.

Weiterhin ist gemäß einer bevorzugten Fortbildung vorgesehen, dass das Verfahren den Schritt der Demontage von Polschuhen umfasst. Beispielsweise können die Polschuhe demontiert werden um Zugang zu weiteren Teilen des Generators zu erhalten. Durch die Demontage der Polschuhe wird zusätzlicher Raum geschaffen, der Reparatur- oder Wartungsarbeiten am Generator erleichtert. Die Polschuhe sind Strukturelemente, die typischerweise aus magnetischem Material bestehen und um das Blechpaket des Generators herum angebracht sind.

In einer weiteren bevorzugten Ausführungsform kann das Verfahren ein Reinigen der Nut umfassen, aus der der erste Schenkel der defekten Formspule entfernt wurde und/oder aus der der zweite Schenkel der defekten Formspule entfernt wurde. Die Reinigung erfolgt unter Verwendung geeigneter Reinigungsmittel und -verfahren, um sicherzustellen, dass alle Rückstände und Verunreinigungen vollständig entfernt werden. Dies kann das Entfernen von altem Isoliermaterial, Schmutz oder anderen Ablagerungen umfassen, die sich im Laufe der Zeit in den Nuten angesammelt haben können. Durch das Reinigen der Nuten wird sichergestellt, dass die neuen Formspulen ordnungsgemäß eingebettet werden können und dass keine Hindernisse vorhanden sind, die die ordnungsgemäße Funktion des Generators beeinträchtigen könnten.

In einer weiteren bevorzugten Ausführungsform kann das Verfahren ein Einlegen eines Isolierungselements in die Nut umfassen, aus der der erste Schenkel der defekten Formspule entfernt wurde und/oder aus der der zweite Schenkel der defekten Formspule entfernt wurde. Das Isolierungselement umfasst oder ist in einer bevorzugten Ausführungsform Isolierpapier, kann jedoch auch aus einem anderen geeigneten Isoliermaterial bestehen. Vorzugsweise umfasst der Schritt des Einlegens des Isolierungselements ein Umschließen des elektrischen Leiters mit einem Isolierungselement. Ergänzend oder alternativ kann es bevorzugt sein, dass der Schritt des Einlegens des Isolierungselements ein Umschließen des entsprechenden Schenkels umfasst. Insbesondere kann es bevorzugt sein, dass der Schritt des Einlegens des Isolierungselements ein Umwickeln oder Bandagieren des elektrischen Leiters mit Isolationspapier umfasst. Ergänzend oder alternativ kann es bevorzugt sein, dass der Schritt des Einlegens des Isolierungselements ein Umwickeln oder Bandagieren des entsprechenden Schenkels umfasst.

Gemäß einer ferner bevorzugten Ausführungsform umfasst das Verfahren ein Einbringen mindestens einer Durchgangsbohrung in den oder die neuen Nutenverschlusskeil/e. Es können auch mehrere Durchgangsbohrungen in einen oder mehreren der neuen Nutenverschlusskeile eingebracht werden. Das Einbringen der Durchgangsbohrung kann hierbei durch ein geeignetes Verfahren erfolgen.

Nach einer weiteren bevorzugten Ausführungsform umfasst das Verfahren ein Einbringen oder Anordnen eines Dichtmittels zwischen dem Blechpaket und dem oder den Nutenverschlusskeil/en. Hierbei wird die eine Nut oder werden die mehreren Nuten in Radialrichtung abgedichtet. Ein Austritt des Harzes aus der Nut im Betriebszustand in Richtung des Luftspaltes ist somit unterbunden und nicht möglich. Ergänzend oder alternativ ist in bevorzugter Weise ein Abdichten der Nut/en an dem ersten Nutende und/oder an dem zweiten Nutende vorgesehen, so dass ein Austritt des Harzes aus der oder den Nut/en in Axialrichtung unterbunden wird. Als Dichtmittel kommt beispielsweise Silikon oder auch ein Filz oder aber auch ein Vlies in Betracht. Durch das Einbringen oder Anordnen des Dichtmittels wird das Risiko, dass der zu reparierende Generator durch aus der Nut auslaufendes Harz verschmutzt wird, reduziert. Hinzu hat das Einbringen oder Anordnen des Dichtmittels den Vorteil, dass Harz mit einem höheren Druck in die Nut gepresst werden kann.

Weiterhin ist gemäß einer bevorzugten Ausführungsform vorgesehen, dass das Verfahren ein Montieren mindestens eines Harzzuführventils an dem einen oder den mehreren neuen Nutenverschlusskeilen umfasst. Es können auch mehrere Harzzuführventile an dem einen oder den mehreren neuen Nutenverschlusskeilen montiert werden. Das eine Harzzuführventil oder die mehrere Harzzuführventile sind hierbei bevorzugt als Schmiernippel ausgebildet. Das eine Harzzuführventil oder die mehrere Harzzuführventile können hierbei insbesondere in die Durchgangsbohrung oder die mehreren Durchgangsbohrungen des einen oder der mehreren neuen Nutenverschlusskeile montiert oder eingesetzt werden. Das Harz kann gleichmäßiger verteilt werden, wenn mehrere Harzzuführventile verwendet werden. Allerdings steigt damit auch der Aufwand beim Einbringen des Harzes in die Nut. Denn die Harzpresseinheit muss häufiger umgesetzt werden. Durch eine geringere Anzahl von Harzzuführventilen reduziert sich die Anzahl des Umsetzens der Harzpresseinheit, so dass sich der Aufwand des Einbringens des Harzes in die Nut verringert.

In einer weiteren bevorzugten Fortbildung des Verfahrens ist vorgesehen, dass der Schritt des Einbringens von Harz in die Nut/en, in welche der erste und/oder der zweie Schenkel der neuen Formspule eingesetzt wurde/n, folgende Schritte umfasst: Bereitstellen einer Harzpresseinheit. Die Harzpresseinheit kann insbesondere speziell für das Einbringen von Harz in die Nuten konzipiert sein. Anschließend erfolgt ein Aufsetzen der Harzpresseinheit auf das mindestens eine Harzzuführventil. Diese Ventile dienen als Schnittstelle zwischen der Harzpresseinheit und den Nuten, durch die das Harz eingebracht wird. Danach erfolgt ein Betätigen der aufgesetzten Harzpresseinheit zum Einbringen von Harz in die Nut/en.

Durch das Betätigen der Harzpresseinheit wird das Harz mit dem erforderlichen Druck in die Nuten gedrückt, wodurch eine gleichmäßige Verteilung und ein vollständiges Füllen der Nuten mit Harz erfolgt. Prinzipiell ist es denkbar, das Harz mit einem Druck von bis zu 1.000 bar in die Nut zu pressen.

In einer ferner bevorzugten Ausführungsform erfolgt das Einbringen von Harz in die Nut/en, in welche der erste und/oder der zweie Schenkel der neuen Formspule eingesetzt wurde/n, bis das eingebrachte Harz an dem ersten Nutende und/oder an dem zweiten Nutende aus der oder den Nut/en heraustritt. Dadurch wird sichergestellt, dass die Nuten vollständig mit Harz gefüllt sind und keine Hohlräume oder Lufteinschlüsse verbleiben. Durch das eingepresste Harz ist die Nut abgedichtet und der elektrische Leiter in der Nut fixiert. Zusätzlich verbessert sich die thermische Leitfähigkeit der Nut, sodass keine unzulässig hohen Temperaturen in der Nut auftreten.

Ferner ist gemäß einerweiteren bevorzugten Fortbildung vorgesehen, dass der elektrische Leiter der mehreren Formspulen aus Aluminium besteht oder umfasst. Dies bedeutet, dass der elektrische Leiter, der die mehreren Formspulen bildet, entweder vollständig aus Aluminium gefertigt ist oder Aluminium in seiner Zusammensetzung enthält. Ergänzend oder alternativ ist vorgesehen, dass der elektrische Leiter der defekten Formspule aus Aluminium besteht oder Aluminium umfasst.

In einer weiteren bevorzugten Ausführungsform ist vorgesehen, dass der jeweilige elektrische Leiter der einen oder mehreren Formspulen mehrere Lagen, vorzugsweise zwei oder drei lagen, aufweist, wobei vorzugsweise die mehreren Lagen mit dem ersten und dem zweiten Anschluss verbunden sind, wobei die eine oder mehreren Windungen, vorzugsweise vier Windungen, geformt sind. Die Formspulen können jedoch auch aus weniger als vier oder mehr als vier Windungen geformt sein. Die Formspulen können beispielsweise aus zwei oder drei Windungen geformt sein. Die Formspulen können beispielsweise auch aus fünf, sechs, sieben, acht oder neun Windungen geformt sein. Die Formspulen können aus 10 oder mehr Windungen geformt sein.

In einer weiteren bevorzugten Ausführungsform ist oder umfasst der elektrische Leiter der neuen Formspule oder der neuen Formspulen eine Kupferflachstange oder ein Kupferband oder ein Kupferflachdraht oder eine Kupferlitze. Alternativ ist oder umfasst der elektrische Leiter der neuen Formspule oder der neuen Formspulen eine Aluminiumflachstange oder ein Aluminiumband oder ein Aluminiumflachdraht oder eine Aluminiumlitze. Ergänzend oder alternativ ist das Harz ein zwei Komponenten Elektroisolationsharz. Bevorzugt ist das Harz dazu ausgebildet bei einer Umgebungstemperatur von mindestens 0 °C, insbesondere von mindestens 10 °C und/oder maximal 50 °C, insbesondere von maximal 30 °C auszuhärten. Ergänzend oder alternativ ist es bevorzugt, dass das Harz bei einer Temperatur von 19 °C eine dynamische/kinematische Viskosität von mindestens 500 mPA und/oder maximal von 10000 mPA, insbesondere von mindestens 1000 mPA und/oder maximal von 3000 mPA aufweist.

In einer weiterhin bevorzugten Ausführungsform ist vorgesehen, dass der Schritt des Entfernens des ersten und/oder des zweiten Schenkels der defekten Formspule aus der oder den Nut/en, ein Entfernen, insbesondere ein Herausschälen, des ersten und/oder des zweiten Schenkels Lage für Lage und/oder Windung für Windung ist oder umfasst.

Gemäß einem zweiten Aspekt der Erfindung wird die eingangs genannte Aufgabe nach Anspruch 15 durch einen Generator, insbesondere einen Generator für eine Windenergieanlage, gelöst.

Zu den Vorteilen, Ausführungsvarianten und Ausführungsdetails des zweiten Aspekts der Erfindung und ihrer Fortbildungen wird auch auf die vorangegangene Beschreibung zu den entsprechenden Merkmalen des Verfahrens zur Reparatur eines Generators mit Formspulen bzw. der jeweiligen anderen Aspekte verwiesen.

Der erfindungsgemäße Generator ist insbesondere ein Generator für eine Windenergieanlage. Der Generator weist mehrere Formspulen auf. Jede Formspule wird durch einen elektrischen Leiter gebildet, der sich zwischen einem ersten Anschluss und einem zweiten Anschluss erstreckt. Dabei ist der erste Anschluss einer Formspule mit dem zweiten Anschluss einer weiteren Formspule verbunden. Der elektrische Leiter jeder Formspule besteht aus zwei parallel zueinander verlaufenden Schenkeln, die sich zwischen einem ersten und einem zweiten Spulenkopf erstrecken. Diese Schenkel sind miteinander verbunden. Die Schenkel können die Grundstruktur der Formspule bilden.

Der Generator weist außerdem ein Blechpaket auf. Insbesondere weist er ein Blechpaket auf, das für einen Rotor oder einen Stator des Generators ausgelegt ist. Dieses Blechpaket weist mehrere sich in Axialrichtung parallel zur Drehachse des Generators und parallel zueinander zwischen einem ersten Nutende und einem zweiten Nutende erstreckende Nuten auf, die in Bezug zu der Drehachse in Umfangsrichtung beabstandet zueinander angeordnet sind. Das Blechpaket weist mehrere Nuten auf, die sich in Axialrichtung parallel zur Drehachse des Generators erstrecken. Die Nuten sind parallel zueinander angeordnet und erstrecken sich zwischen einem ersten Nutende und einem zweiten Nutende. Sie sind in Bezug zur Drehachse des Generators in Umfangsrichtung beabstandet.

Die beiden Schenkel jeder Formspule sind jeweils in einer dieser Nuten eingesetzt, die durch einen Nutenverschlusskeil in Richtung des Luftspalts zwischen dem Stator und dem Rotor verschlossen sind.

Der elektrische Leiter einer oder mehrerer Formspulen der mehreren Formspulen, besteht aus Aluminium oder umfasst Aluminium. Bevorzugt besteht die Mehrzahl der mehreren Formspulen aus Aluminium oder umfasst Aluminium. Der elektrische Leiter des mindestens eines Schenkels der mindestens einen Formspule der mehreren Formspulen besteht aus Kupfer oder umfasst Kupfer. Die elektrischen Leiter können auch aus anderen geeigneten Materialien bestehen.

Gemäß einem dritten Aspekt der Erfindung wird die eingangs genannte Aufgabe nach Anspruch 16 durch einen Generator, insbesondere einen Generator für eine Windenergieanlage, gelöst. Gemäß diesem Aspekt ist dieser wie zuvor beschrieben nach dem erfindungsgemäßen Verfahren repariert worden.

Gemäß einem vierten Aspekt der Erfindung wird die eingangs genannte Aufgabe nach Anspruch 17 durch eine Windenergieanlage gelöst. Die Windenergieanlage umfasst einen Generator gemäß dem zweiten oder dritten Aspekt der Erfindung.

Zu den Vorteilen, Ausführungsvarianten und Ausführungsdetails dieser weiteren Aspekte der Erfindung und ihrer Fortbildungen wird auch auf die vorangegangene Beschreibung zu den entsprechenden Merkmalen des Verfahrens zur Reparatur eines Generators mit Formspulen bzw. der jeweiligen anderen Aspekte verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine schematische Darstellung einer Windenergieanlage;
- Fig. 2: eine schematische Seitenansicht eines Generators der in Figur 1 dargestellten Windenergieanlage in der Schnittdarstellung;
- Fig. 3a: eine erste schematische Ansicht einer Formspule in einer bevorzugten Ausführungsform;
- Fig. 3b: eine zweite schematische Ansicht der in Figur 3a dargestellten Formspule;
- Fig. 4a: einen Ausschnitt einer perspektivischen Ansicht eines Stators in einer bevorzugten Ausführungsform des in Figur 2 dargestellten Generators;
- Fig. 4b: eine beispielhafte Darstellung eines Stators mit sechs eingelegten Formspulen;
- Fig. 5a: einen Ausschnitt eines reparaturbedürftigen Generators in einer schematischen Seitenansicht;
- Fig. 5b: einen Ausschnitt des in Fig. 5a dargestellten reparaturbedürftigen Generators in einer schematischen Draufsicht;
- Fig. 6a: einen Ausschnitt des reparaturbedürftigen Generators in Fig. 5a mit demontierter defekter Formspule;
- Fig. 6b: einen Ausschnitt des reparaturbedürftigen Generators in Fig. 5b mit demontierter defekter Formspule;
- Fig. 7a: einen Ausschnitt des reparaturbedürftigen Generators in Fig. 5a und 6a mit montierter neuer Formspule;
- Fig. 7b: einen Ausschnitt des reparaturbedürftigen Generators in Fig. 5b und 6b mit montierter neuer Formspule;
- Fig. 8: ein schematisches Blockdiagramm eines Verfahrens zur Reparatur des in Figur 2 dargestellten Generators in einer ersten Ausführungsform; und
- Fig. 9: ein schematisches Blockdiagramm eines Verfahrens zur Reparatur des in Figur 2 dargestellten Generators in einer zweiten Ausführungsform;

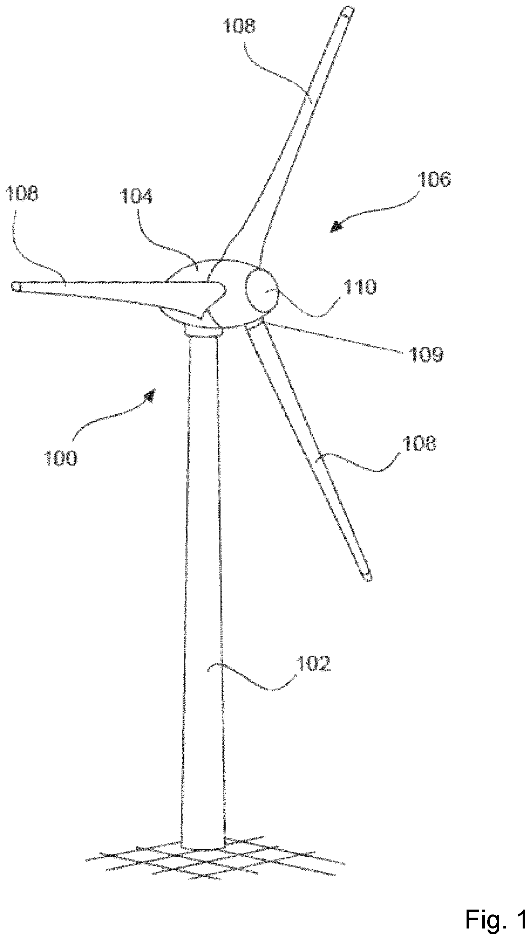

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

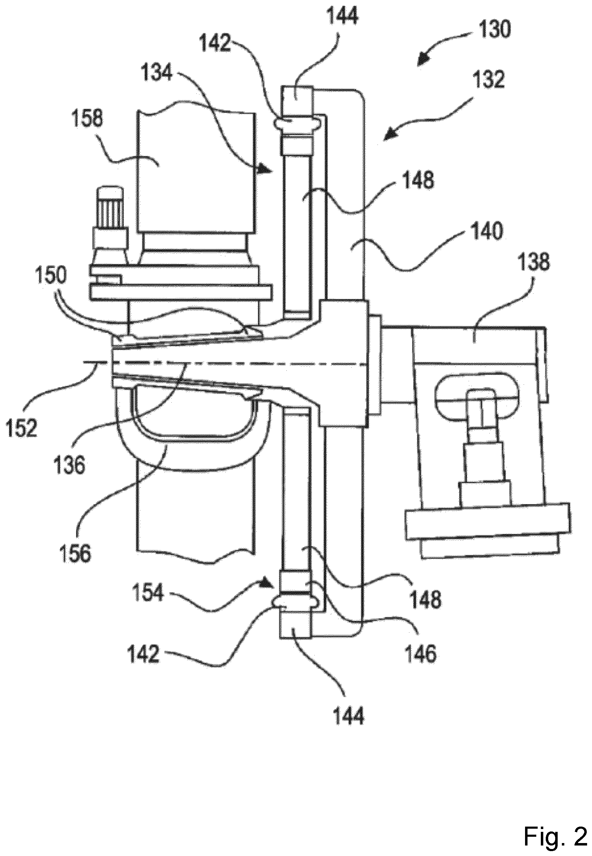

Fig. 2 zeigt einen Generator 130 schematisch in einer Seitenansicht. Erweist einen Stator 132 und einen dazu drehbar gelagerten elektrodynamischen Rotor 134 auf und ist mit seinem Stator 132 über einen Achszapfen 136 an einem Maschinenträger 138 befestigt. Der Stator 132 weist einen Statorträger 140 und Statorblechpakete 142 auf, die Statorpole des Generators 130 bilden und über einen Statorring 144 an dem Statorträger 140 befestigt sind.

Der elektrodynamische Rotor 134 weist Rotorpolschuhe 146 auf, die die Rotorpole bilden und über einen Rotorträger 148 und Lager 150 auf dem Achszapfen 136 drehbar um die Drehachse 152 gelagert sind. Die Statorblechpakete 142 und Rotorpolschuhe 146 trennt nur ein schmaler Luftspalt 154, der wenige Millimeter dick ist, insbesondere weniger als 6 mm, aber einen Durchmesser von mehreren Metern aufweist, insbesondere mehr als 4 m.

Die Statorblechpakete 142 und die Rotorpolschuhe 146 bilden jeweils einen Ring und sind zusammen auch ringförmig, so dass der Generator 130 ein Ringgenerator ist. Bestimmungsgemäß dreht sich der elektrodynamische Rotor 134 des Generators 130 zusammen mit der Rotornabe 156 des aerodynamischen Rotors, von dem Ansätze von Rotorblättern 158 angedeutet sind.

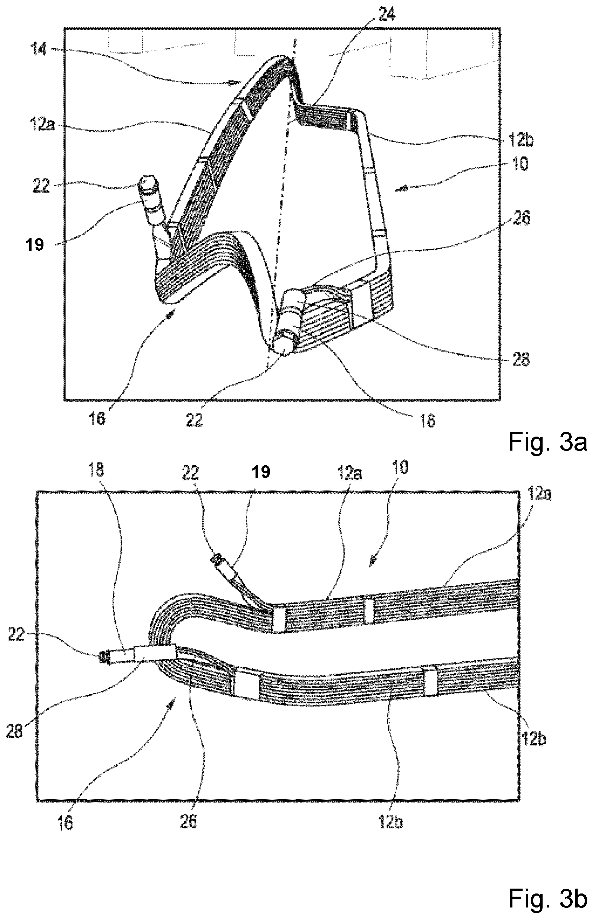

Fig. 3a zeigt eine Ansicht eines Ausführungsbeispiels einer Formspule 10. Die Formspule 10 weist zwei Schenkel 12a, 12b auf. Die Schenkel 12a, 12b verlaufen parallel zueinander und weisen eine Länge von ca. 70 bis 80 cm auf. Die beiden Schenkel 12a, 12b sind an einem ersten Ende 14 sowie an einem zweiten Ende 16 miteinander verbunden.

Das zweite Ende 16 der Formspule 10 weist einen ersten Anschluss 18 sowie einen zweiten Anschluss 19 auf. Die Anschlüsse 18, 19 weisen ein Innengewinde auf. In das Innengewinde der Anschlüsse 18, 19 sind Schrauben 22 eingedreht. Bezogen auf eine Spulenlängsachse 24 oder auf eine Parallele zur Spulenlängsachse 24 ist der zweite Anschluss 19 abgewinkelt und der erste Anschluss 18 nicht abgewinkelt.

Die Formspule 10 umfasst einen Leiter26 und die Anschlüsse 18 und 19, die mit Aluminium gefertigt sind. Ferner sind die Schrauben 22 mit Messing gefertigt. Der Leiter 26 besteht aus zwei Lagen eines Flachdrahts, die in vier Windungen geformt sind. Das heißt, mit den beiden Anschlüssen 18, 19 sind zwei Lagen des Flachdrahts, der auch Kupferflachdraht genannt wird, verbunden.

Die Formspule 10 ist also mit diesen zwei Lagen und vier Windungen geformt, sodass im Bereich der Schenkel 12a, 12b und im Bereich des ersten Endes 14 acht Lagen des Kupferflachdrahts übereinander angeordnet oder gestapelt sind. Es ist zu verstehen, dass aber grundsätzlich auch davon abweichende Windungszahlen in Betracht kommen.

Aufgrund der herausgeführten Anschlüsse 18, 19 sind im Bereich des zweiten Endes 16 noch sechs Lagen übereinander angeordnet. Der Flachdraht ist durch Lackieren isoliert.

Im Verbindungsbereich des Leiters 26 mit den Anschlüssen 18, 19 ist die Isolierung jedoch entfernt worden, um die Anschlüsse 18, 19 durch Wolfram-Inertgas-Schweißen mit dem Leiter 26 zu verbinden. Im Bereich der Verbindung des ersten Anschlusses 18 mit dem Leiter 26 ist ein glasfaserverstärkter Kunststoff 28 angebracht, um diesen von der Isolierung des Leiters 26 befreiten Teil wieder zu isolieren.

Gemäß einem nicht dargestellten Ausführungsbeispiel ist ein derartiger glasfaserverstärkter Kunststoff auch im Verbindungsteil zwischen dem zweiten Anschluss 19 und dem Leiter 26 vorgesehen. Damit die Formspule 10 ihre Form bewahrt, sind die Lagen der Formspule in schmalen Bereichen umwickelt. Eine Isolationswicklung ist jedoch nicht vorhanden.

Fig. 3b zeigt eine weitere Ansicht der Formspule 10, wobei hier das zweite Ende 16 mit einem Teil der Schenkel 12a, 12b von der Seite dargestellt ist. Das in Fig. 3b dargestellte Ausführungsbeispiel der Formspule entspricht dem Ausführungsbeispiel der Formspule in Fig. 3a.

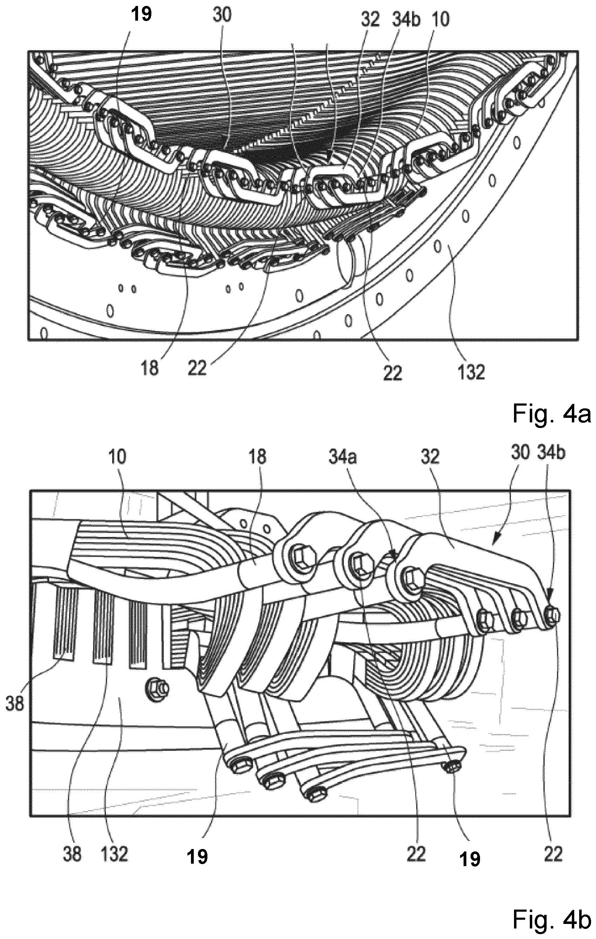

Fig. 4a zeigt eine perspektivische Ansicht eines Stators 132 eines Generators 130 einer Windenergieanlage 100 mit Formspulen 10. Die Formspulen 10 weisen jeweils einen ersten Anschluss 18 und einen zweiten Anschluss 19 auf. Die ersten Anschlüsse 18 der Formspulen 10 sind jeweils mit ersten Anschlüssen 18 anderer Formspulen 10 verbunden. Gleiches gilt für die zweiten Anschlüsse 19 der Formspulen 10.

Die Verbindungen sind durch Verbindungselemente 30 hergestellt. Die Verbindungselemente 30 umfassen jeweils eine Flachstange 32, die an ihrem Ende 34a, 34b jeweils einen Durchbruch aufweist. Diese Durchbrüche sind gemäß der Darstellung nicht erkennbar, da Schrauben 22 durch die Durchbrüche in die Anschlüsse 18, 19 eingeschraubt sind. Die Flachstangen 32 weisen eine U-Form auf, sodass jeder sechste erste Anschluss 18 und jeder sechste zweite Anschluss 19 durch ein derartiges Verbindungselement 30 verbunden ist, ohne dass das Verbindungselement 30 in Berührung mit anderen Anschlüssen 18, 19, die nicht miteinander verbunden werden sollen, steht. Daher sind die Verbindungselemente 30 nicht isoliert. Alternativ kann die Verbindung auch durch eine Schweißverbindung realisiert sein.

Ferner ist erkennbar, dass die Verbindungselemente 30 in verschiedenen Ebenen angeordnet sind. Dies ist möglich, da die Anschlüsse 18, 19 benachbarter Formspulen 10 unterschiedlich weit hervorstehen.

Die Verbindungselemente 30, die mit den zweiten Anschlüssen 19 verbunden sind, weisen Durchbrüche auf, die weiter voneinander beabstandet sind als die Durchbrüche der Verbindungselemente 30, die mit dem ersten Anschluss 18 verbunden sind. Dies liegt daran, dass - ausgehend von einem Zentrum des Stators 132 aus - die zweiten Anschlüsse 19 auf einem größeren Radius liegen als die ersten Anschlüsse 18.

Ferner sind die Flachstangen 32 der Verbindungselemente 30 gekröpft oder leicht abgewinkelt, damit die Schrauben 22 sauber in die Gewinde der zweiten Anschlüsse 19 eingreifen können. Prinzipiell sind aber auch davon abweichende Ausgestaltungen denkbar.

Fig. 4b zeigt einen exemplarischen Aufbau eines Stators 132, in dessen Nuten 38 sechs Formspulen 10 eingesetzt sind. Die Formspulen 10 sind mittels Verbindungselementen 30 miteinander verbunden. Hier sei darauf hingewiesen, dass die elektrische Verbindung nur zu Testzwecken der Herstellung der Schraubverbindung hergestellt ist. Die Verschaltung der Spulen im späteren Einsatz unterscheidet sich von der dargestellten Schaltung und ist demnach nur exemplarisch. Bei der in Fig. 4b dargestellten Verschaltung handelt es sich nämlich um einen in sich geschlossenen Strang, also einen Kurzschluss. Alle zwölf Anschlüsse der sechs Spulen sind nämlich miteinander verbunden.

In den Nuten 38, die aus Darstellungsründen nicht mit Formspulen 10 belegt sind, ist im linken Bereich der Figur auch die geblechte Ausführung des Stators 132 zu erkennen.

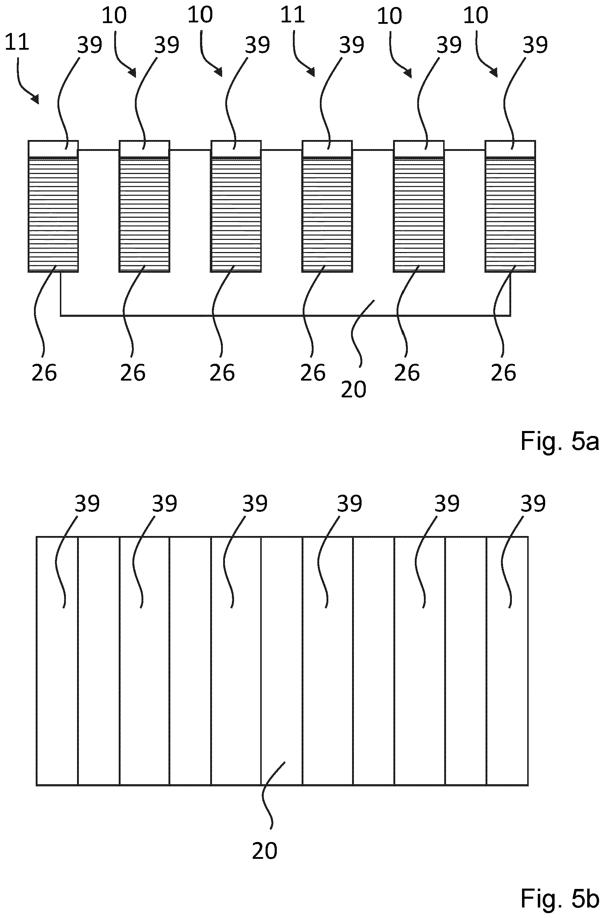

Fig. 5a zeigt einen Ausschnitt eines exemplarischen reparaturbedürftigen Generators in einer Seitenansicht mit zwei intakten Formspulen 10 und einer defekten Formspule 11, die jeweils durch einen elektrischen Leiter 26 gebildet werden. Die Formspulen 10, 11 sind in Nuten eines Blechpakets 20 eingelegt, wobei die Nuten 38 des Blechpakets 20 an der offenen Seite mit Nutenverschlusskeilen 39 verschlossen sind. Somit sind die Formspulen jeweils in den Nuten 38 von dem Blechpaket und den Nutenverschlusskeil umschlossen. Der elektrische Leiter erstreckt sich zwischen einem ersten und zweiten Anschluss, wie dies in den Figuren 3a bis 4b gezeigt ist.

Fig. 5b zeigt einen Ausschnitt des exemplarischen reparaturbedürftigen Generators wie in Figur 5a dargestellt in einer schematischen Draufsicht auf die Innenumfangsseite, wobei die Nutenverschlusskeile 39 sichtbar sind welche in den Nuten des Blechpakets 20 sitzen.

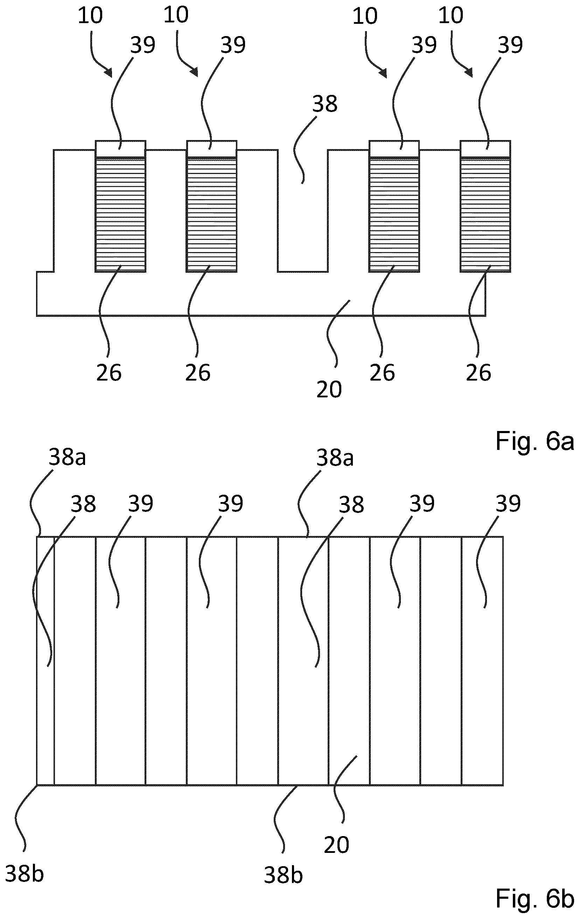

Fig. 6a zeigt den Ausschnitt des exemplarischen reparaturbedürftigen Generators mit einer demontierten defekten Formspule 11, sodass zwei Nuten 38 des Blechpakets 20 frei sind bzw. nicht belegt sind. Das in Fig. 6a dargestellte Ausführungsbeispiel des reparaturbedürftigen Generators entspricht dem Ausführungsbeispiel in Fig. 5a.

Fig. 6b zeigt einen Ausschnitt des exemplarischen reparaturbedürftigen Generators in einer schematischen Draufsicht auf die Innenumfangsseite mit einer demontierten defekten Formspule. Aus dieser Ansicht geht hervor, dass sich die Nuten 38 zwischen einem ersten Nutende 38a und einem zweiten Nutende 38b erstrecken. Das in Fig. 6b dargestellte Ausführungsbeispiel des reparaturbedürftigen Generators entspricht der Ansicht in Fig. 5b, wobei die defekte Formspule 11 und die Nutenverschlusskeile 39, welche den ersten und zweiten Schenkel 12a, 12b der defekten Formspule 11 verdeckt haben, entnommen worden sind.

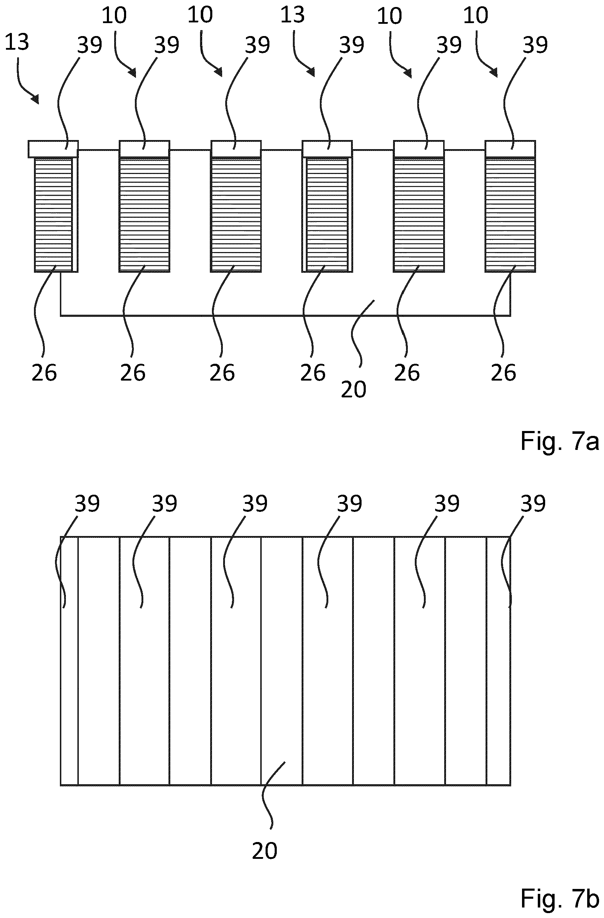

Fig. 7a zeigt einen Ausschnitt des exemplarischen reparaturbedürftigen Generators mit einer montierten neuen Formspule 13, welche in die Nuten eingesetzt worden ist, in denen zuvor die defekte Spule 11 eingesetzt war. Die neue Formspule 13 ist analog zu den bestehenden Formspulen 10 aufgebaut und besteht ebenfalls aus einem elektrischem Leiter 26 und ist mit Nutenverschlusskeilen 39 versehen. Das in Fig. 7a dargestellte Ausführungsbeispiel des reparaturbedürftigen Generators entspricht dem Ausführungsbeispiel der Fig. 5a und 6a. Fig. 7b zeigt einen Ausschnitt des exemplarischen reparaturbedürftigen Generators mit montierten neuen Formspulen in einer schematischen Draufsicht auf die Innenumfangsseite. Das in Fig. 7b dargestellte Ausführungsbeispiel des reparaturbedürftigen Generators entspricht den Ansichten in den Figuren 5b und 6b.

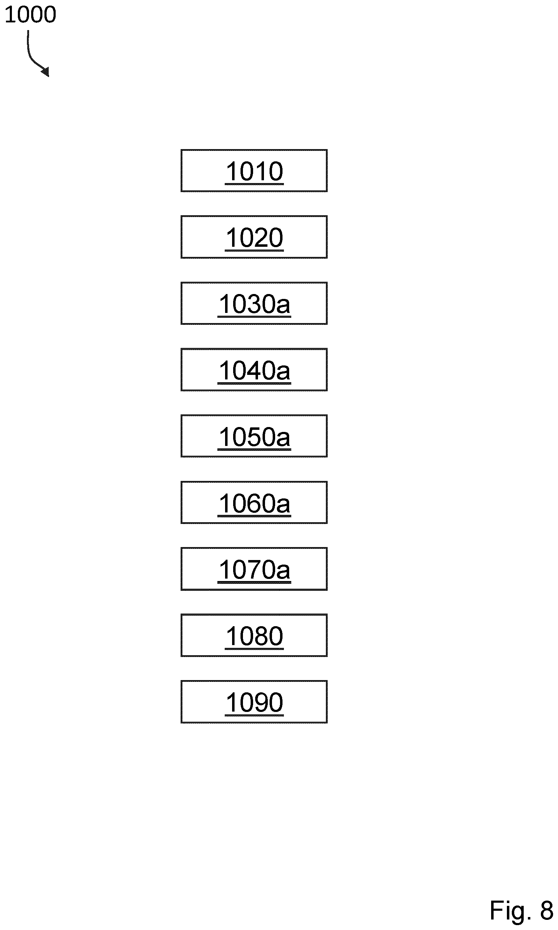

Fig. 8 zeigt ein schematisches Blockdiagramm eines Verfahrens 1000 zur Reparatur des in Fig. 2 dargestellten Generators in einer ersten Ausführungsform. Das Verfahren umfasst in einem ersten Schritt das Entkoppeln 1010 des ersten Anschlusses 18 und zweiten Anschlusses 19 einer defekten Formspule 11 von zwei weiteren der mehreren Formspulen 10. In einem zweiten Schritt erfolgt das Abtrennen 1020 des ersten Spulenkopfes 14 und zweiten Spulenkopfes 16 der defekten Formspule 11. Anschließend wird der Nutenverschlusskeil 39, welcher eine Nut 38 verschließt, in der ein erster Schenkel 12a einer defekten Formspule 11 eingesetzt ist, aufgetrennt 1030a. Danach wird der erste Schenkel 12a der defekten Formspule 11 aus der Nut 38 entfernt 1040a.

In einem nächsten Schritt wird ein erster Schenkel 12a einer neuen Formspule 13 mit einem elektrischen Leiter aus Kupfer oder Aluminium eingesetzt 1050a. Anschließend wird ein neuer Nutenverschlusskeil 39 in die Nut 38 eingesetzt 1060a, in welche der erste Schenkel 12a der neuen Formspule 13 eingesetzt wurde, wobei die Nut 38 durch den neuen Nutenverschlusskeil 39 in Richtung des im Betriebszustand zwischen Stator und Rotor bestehenden Luftspalts verschlossen wird. Danach wird im Schritt 1070a Harz in die Nut 38 eingebracht, in die der erste Schenkel 12a der neuen Formspule 13 eingesetzt wurde. Anschließend wird der erste Schenkel 12a mit dem zweiten Schenkel 12b verbunden 1080. In einem letzten Schritt 1090 wird der erste und zweite Anschluss mit dem ersten und zweiten Anschluss der zwei weiteren Formspulen 10 gekoppelt.

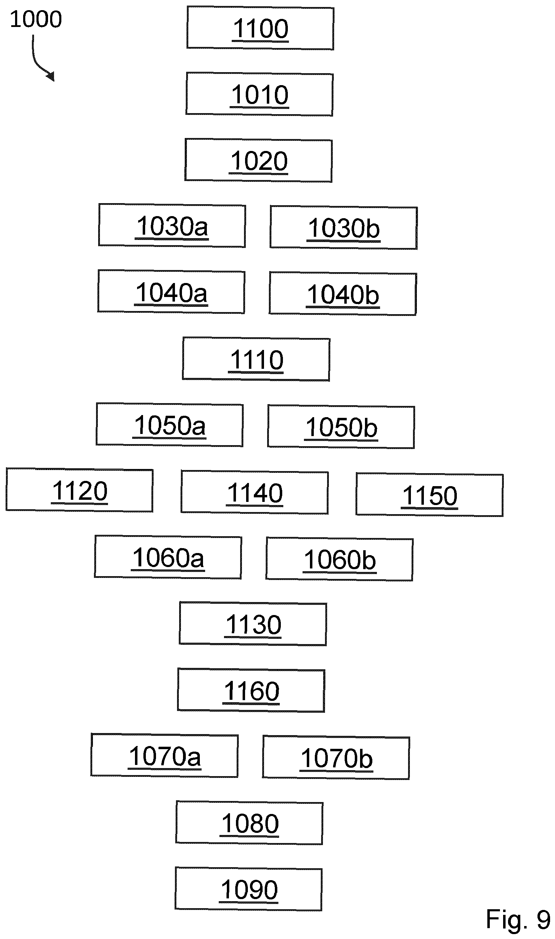

Fig. 9 zeigt ein schematisches Blockdiagramm eines Verfahrens zur Reparatur des in Figur 2 dargestellten Generators in einer zweiten Ausführungsform. Das Verfahren umfasst in einem ersten Schritt das Entkoppeln 1010 des ersten 18 und zweiten Anschlusses 19 einer defekten Formspule 11 von zwei weiteren der mehreren Formspulen 10. In einem zweiten Schritt erfolgt das Abtrennen 1020 des ersten 14 und zweiten Spulenkopfes 16 der defekten Formspule 11. Anschließend wird der Nutenverschlusskeil 39, welcher eine Nut 38 verschließt, in der ein erster Schenkel 12a einer defekten Formspule 11 eingesetzt ist aufgetrennt 1030a, und/oder wird der Nutenverschlusskeils 39, der eine Nut verschließt, in der ein zweiter Schenkel 12b der defekten Formspule 11 eingesetzt ist aufgetrennt 1030b. Danach wird der erste Schenkel 12a der defekten Formspule 11 aus der Nut 38 entfernt 1040a, und/oder wird der zweite Schenkel 12b der defekten Formspule 11 aus der Nut 38 entfernt 1040b. Im Schritt 1110 Wird die Nut bzw. werden die Nuten gereinigt, aus denen der erste und zweite Schenkel der defekten Spule entfernt worden sind.

In einem nächsten Schritt wird ein erster Schenkel 12a einer neuen Formspule 13 mit einem elektrischen Leiter 26 aus Kupfer oder Aluminium eingesetzt 1050a und/oder ein zweiter Schenkel 12b einer neuen Formspule 13 mit einem elektrischen Leiter 26 aus Kupfer oder Aluminium eingesetzt 1050b. Danach wird ein Isolierungspapier in die Nut eingelegt 1120, aus der der erste und/oder der zweite Schenkel der defekten Formspule entfernt wurde und/oder wird im Schritt 1140 ein Dichtmittel zwischen Blechpaket 20 und dem oder den Nutenverschlusskeil/en zum Abdichten der Nut/en in Radialrichtung eingebracht, so dass ein Austritt des Harzes aus der Nut im Betriebszustand in Richtung des Luftspaltes unterbunden wird und/oder es erfolgt im Schritt 1050 ein Abdichten der Nut/en an dem ersten Nutende und/oder an dem zweiten Nutende, so dass ein Austritt des Harzes aus der oder den Nut/en in Axialrichtung unterbunden wird.

Anschließend wird ein neuer Nutenverschlusskeil 39 in die Nut 38 eingesetzt 1060a, in welche der erste Schenkel 12a der neuen Formspule 13 eingesetzt wurde, wobei die Nut 38 durch den neuen Nutenverschlusskeil 39 in Richtung des im Betriebszustand zwischen Stator und Rotor bestehenden Luftspalts verschlossen wird und/oder es wird ein neuer Nutenverschlusskeil 39 in die Nut 38 eingesetzt 1060b, in welche der zweite Schenkel 12a der neuen Formspule 13 eingesetzt wurde, wobei die Nut 38 durch den neuen Nutenverschlusskeil 39 in Richtung des im Betriebszustand zwischen Stator und Rotor bestehenden Luftspalts verschlossen wird. Anschließend wird im Schritt 1030 mindestens eine Durchgangsbohrung in den oder die neuen Nutenverschlusskeil/e eingebracht.

Im Schritt 1160 wird mindestens ein Harzzuführventil montiert, insbesondere ein Schmiernippel, an dem oder den neuen Nutenverschlusskeil/en, wobei das Harzzuführventil vorzugsweise in die Durchgangsbohrung eingesetzt wird. Danach wird im Schritt 1070a Harz in die Nut 38 eingebracht, in die der erste Schenkel 12a der neuen Formspule 13 eingesetzt wurde und/oder wird im Schritt 1070b Harz in die Nut 38 eingebracht, in die der zweite Schenkel 12a der neuen Formspule 13 eingesetzt wurde. Anschließend wird der erste Schenkel 12a mit dem zweiten Schenkel 12b verbunden 1080. In einem letzten Schritt 1090 wird der erste und zweite Anschluss mit dem ersten und zweiten Anschluss der zwei weiteren Formspulen 10 gekoppelt.

### BEZUGSZEICHENLISTE

- 10: Formspule
- 11: defekte Formspule
- 12a: erster Schenkel
- 12b: zweiter Schenkel
- 13: neue Formspule
- 14: erstes Ende eines Schenkels bzw. erster Spulenkopf
- 16: zweites Ende eines Schenkels bzw. zweiter Spulenkopf
- 18: erster Anschluss einer Formspule
- 19: zweiter Anschluss einer Formspule
- 20: Blechpaket
- 22: Schrauben
- 24: Spulenlängsachse
- 26: elektrischer Leiter
- 28: glasfaserverstärkter Kunststoff
- 30: Verbindungselement
- 32: Flachstange
- 34a: erstes Ende einer Flachstange
- 34b: zweites Ende einer Flachstange
- 38: Nut
- 38a: erstes Nutende
- 38b: zweites Nutende
- 39: Nutenverschlusskeil
- 100: Windenergieanlage
- 102: Turm
- 104: Gondel
- 106: aerodynamischer Rotor
- 108: Rotorblatt
- 109: Rotorblattwurzeln
- 110: Spinner
- 130: Generator
- 132: Stator
- 134: elektrodynamischer Rotor
- 136: Achszapfen
- 138: Maschinenträger
- 140: Statorträger
- 142: Statorblechpaket
- 144: Statorring
- 146: Rotorpolschuhe
- 148: Rotorträger
- 150: Lager
- 152: Drehachse
- 154: Luftspalt
- 156: Rotornabe
- 158: Rotorblatt

## Patentansprüche

1. Verfahren (1000) zur Reparatur eines Generators (130) mit Formspulen (10, 11), insbesondere eines Generators (130) mit Formspulen (10, 11) einer Windenergieanlage (100) mit Formspulen (10, 11), der zu reparierende Generator (130) aufweisend:
- mehrere Formspulen (10, 11),
∘ die jeweils durch einen elektrischen Leiter (26) gebildet werden, der sich zwischen einem ersten Anschluss (18) und einem zweiten Anschluss (19) erstreckt, wobei jeweils ein erster Anschluss (18) einer Formspule mit einem zweiten Anschluss (19) einer weiteren Formspule (10) verbunden ist, wobei
∘ der elektrische Leiter zwei parallel zueinander verlaufende Schenkel (12a, 12b) bildet, welche sich zwischen einem ersten und zweiten Spulenkopf (14, 16) erstrecken, durch die die beiden Schenkel (12a, 12b) miteinander verbunden sind; und
- ein Blechpaket (20), insbesondere ein Blechpaket für einen Rotor oder ein Blechpaket für einen Stator, das mehrere sich in Axialrichtung (A) parallel zur Drehachse (D) des Generators und parallel zueinander zwischen einem ersten Nutende (38a) und einem zweiten Nutende (38b) erstreckende Nuten (38) aufweist, die in Bezug zu der Drehachse (D) in Umfangsrichtung (U) beabstandet zueinander angeordnet sind; wobei
- die beiden Schenkel (12a, 12b) der Formspulen (10) jeweils in einer der Nuten (38) eingesetzt sind, die durch einen Nutenverschlusskeil (39) in Richtung eines im Betriebszustand zwischen Stator und Rotor bestehenden Luftspalts verschlossen sind;
das Verfahren (1000) umfassend die Schritte:
- Entkoppeln (1010) des ersten und zweiten Anschlusses (18, 19) einer defekten Formspule (11) von zwei weiteren der mehreren Formspulen (10);
- Abtrennen (1020) des ersten und zweiten Spulenkopfes (14, 16) der defekten Formspule (11);
- Auftrennen (1030a) eines Nutenverschlusskeils, der eine Nut verschließt, in der ein erster Schenkel (12a) der defekten Formspule (11) eingesetzt ist;
- Entfernen (1040a) des ersten Schenkels (12a) der defekten Formspule (11) aus der Nut (38);
- Einsetzen (1050a) eines ersten Schenkels (12a) einer neuen Formspule (13) mit einem elektrischen Leiter aus Kupfer oder Aluminium;
- Einsetzen (1060a) eines neuen Nutenverschlusskeils (39) in die Nut (38), in welche der erste Schenkel (12a) der neuen Formspule (13) eingesetzt wurde, wobei die Nut (38) durch den neuen Nutenverschlusskeil (39) in Richtung des im Betriebszustand zwischen Stator und Rotor bestehenden Luftspalts verschlossen wird;
- Einbringen (1070a) von Harz in die Nut, in welche der erste Schenkel (12a) der neuen Formspule (13) eingesetzt wurde;
- Verbinden (1080) des ersten Schenkels (12a) mit dem zweiten Schenkel (12b); und
- Koppeln (1090) des ersten und zweiten Anschlusses mit dem ersten Anschluss und zweiten Anschluss der zwei weiteren Formspulen (10).

2. Verfahren (1000) nach dem vorhergehenden Anspruch 1, umfassend die Schritte:
- Auftrennen (1030b) eines Nutenverschlusskeils (39), der eine Nut verschließt, in der ein zweiter Schenkel (12b) der defekten Formspule (11) eingesetzt ist;
- Entfernen (1040b) des zweiten Schenkels (12b) der defekten Formspule (11) aus der Nut (38);
- Einsetzen (1050b) eines zweiten Schenkels (12b) einer neuen Formspule (13) mit einem elektrischen Leiter (26) aus Kupfer;
- Einsetzen (1060b) eines neuen Nutenverschlusskeils (39) in die Nut (38), in welche der zweite Schenkel (12b) der neuen Formspule (13) eingesetzt wurde, wobei die Nut (38) durch den neuen Nutenverschlusskeil (39) in Richtung des im Betriebszustand zwischen Stator und Rotor bestehenden Luftspalts verschlossen wird; und
- Einbringen (1070b) von Harz in die Nut (38), in welche der zweite Schenkel (12b) der neuen Formspule (13) eingesetzt wurde.

3. Verfahren (1000) nach einem der vorhergehenden Ansprüche 1 oder 2, umfassend den Schritt:
- Demontage (1100) von Polschuhen.

4. Verfahren (1000) nach einem der vorhergehenden Ansprüche 1 bis 3, umfassend den Schritt:
- Reinigen (1110) der Nut, aus der der erste und/oder der zweite Schenkel der defekten Formspule entfernt wurde.

5. Verfahren (1000) nach einem der vorhergehenden Ansprüche 1 bis 4, umfassend den Schritt:
- Einlegen (1120) eines Isolierungselements, insbesondere eines Isolierpapiers, in die Nut, aus der der erste und/oder der zweite Schenkel der defekten Formspule entfernt wurde.

6. Verfahren nach einem der vorhergehenden Ansprüche 1 bis 5, umfassend den Schritt:
- Einbringen (1130) mindestens einer Durchgangsbohrung in den oder die neuen Nutenverschlusskeil/e.

7. Verfahren nach einem der vorhergehenden Ansprüche 1 bis 6, umfassend den Schritt:
- Einbringen oder Anordnen (1140) eines Dichtmittels zwischen dem Blechpaket und dem oder den Nutenverschlusskeil/en zum Abdichten der Nut/en in Radialrichtung, so dass ein Austritt des Harzes aus der Nut im Betriebszustand in Richtung des Luftspaltes unterbunden wird; und/oder
- Abdichten (1150) der Nut/en an dem ersten Nutende und/oder an dem zweiten Nutende, so dass ein Austritt des Harzes aus der oder den Nut/en in Axialrichtung unterbunden wird.

8. Verfahren nach einem der vorhergehenden Ansprüche 1 bis 7, umfassend den Schritt:
- Montieren (1160) mindestens eines Harzzuführventils, insbesondere eines Schmiernippels, an dem oder den neuen Nutenverschlusskeil/en, wobei das Harzzuführventil vorzugsweise in die Durchgangsbohrung eingesetzt wird.

9. Verfahren nach dem vorhergehenden Anspruch 8, wobei der Schritt des Einbringens von Harz in die Nut/en, in welche der erste und/oder der zweite Schenkel der neuen Formspule eingesetzt wurde/n, folgende Unterschritte umfasst:
- Bereitstellen einer Harzpresseinheit;
- Aufsetzen der Harzpresseinheit auf das mindestens eine Harzzuführventil; und
- Betätigen der aufgesetzten Harzpresseinheit zum Einbringen von Harz in die Nut/en.

10. Verfahren nach einem der vorhergehenden Ansprüche 1 bis 9, wobei der Schritt des Einbringens von Harz in die Nut/en, in welche der erste und/oder der zweite Schenkel der neuen Formspule eingesetzt wurde/n, erfolgt bis das eingebrachte Harz an dem ersten Nutende und/oder an dem zweiten Nutende aus der oder den Nut/en heraustritt.

11. Verfahren nach einem der vorhergehenden Ansprüche 1 bis 10, wobei der elektrische Leiter
- der mehreren Formspulen aus Aluminium besteht oder Aluminium umfasst; und/oder
- der defekten Formspule aus Aluminium besteht oder Aluminium umfasst.

12. Verfahren nach einem der vorhergehenden Ansprüche 1 bis 11, wobei
- der jeweilige elektrische Leiter der mehreren Formspulen mehrere Lagen, vorzugsweise zwei oder drei Lagen, aufweist, wobei vorzugsweise die mehreren Lagen jeweils mit dem ersten und zweiten Anschluss verbunden sind, wobei
- die mehreren Formspulen jeweils aus mehreren Windungen, vorzugsweise vier Windungen, geformt sind.

13. Verfahren nach einem der vorhergehenden Ansprüche 1 bis 12, wobei
- der elektrische Leiter der neuen Formspule
∘ eine Kupferflachstange, ein Kupferband oder ein Kupferflachdraht oder eine Kupferlitze ist oder umfasst oder
∘ eine Aluminiumflachstange, ein Aluminiumband oder ein Aluminiumflachdraht oder eine Aluminiumlitze ist oder umfasst; und/oder
- das Harz
∘ ein zwei Komponenten Elektroisolationsharz ist, wobei das Harz vorzugsweise dazu ausgebildet ist, bei einer Umgebungstemperatur von mindestens 0°C, insbesondere von mindestens 10°C, und/oder maximal von 50°C, insbesondere von maximal 30°C, auszuhärten, und/oder
o bei einer Temperatur von 19°C eine dynamische/kinematische Viskosität von mindestens 500 mPa*s und/oder maximal von 10.000 mPa*s aufweist.

14. Verfahren nach einem der vorhergehenden Ansprüche 1 bis 13, wobei der Schritt des Entfernens des ersten und/oder des zweiten Schenkels der defekten Formspule aus der oder den Nut/en, ein Entfernen, insbesondere ein Herausschälen, des ersten und/oder des zweiten Schenkels Lage für Lage und/oder Windung für Windung ist oder umfasst.

15. Generator, insbesondere Generator für eine Windenergieanlage, aufweisend:
- mehrere Formspulen,
∘ die jeweils durch einen elektrischen Leiter gebildet werden, der sich zwischen einem ersten Anschluss und einem zweiten Anschluss erstreckt, wobei ein erster Anschluss einer Formspule mit einem zweiten Anschluss einer weiteren Formspule verbunden ist, wobei
∘ der Leiter zwei parallel zueinander verlaufende Schenkel bildet, welche sich zwischen einem ersten und zweiten Spulenkopf erstrecken, durch die die beiden Schenkel miteinander verbunden sind; und
- ein Blechpaket, insbesondere ein Blechpaket für einen Rotor oder ein Blechpaket für einen Stator, das mehrere sich in Axialrichtung parallel zur Drehachse des Generators und parallel zueinander zwischen einem ersten Nutende und einem zweiten Nutende erstreckende Nuten aufweist, die in Bezug zu der Drehachse in Umfangsrichtung beabstandet zueinander angeordnet sind; wobei
- die beiden Schenkel der Formspulen jeweils in einer der Nuten eingesetzt sind, die durch einen Nutenverschlusskeil in Richtung eines Luftspalts zwischen Stator und Rotor verschlossen sind; wobei
- der elektrische Leiter mehrerer Formspulen, vorzugsweise der Mehrzahl der mehreren Formspulen, aus Aluminium besteht oder Aluminium umfasst und der elektrische Leiter mindestens eines Schenkels mindestens einer Formspule der mehreren Formspulen, aus Kupfer besteht oder Kupfer umfasst.

16. Generator, insbesondere Generator für eine Windenergieanlage, der gemäß dem Verfahren nach einem der vorhergehenden Ansprüche 1 bis 14 repariert worden ist.

17. Windenergieanlage umfassend einen Generator nach einem der vorhergehenden Ansprüche 15 oder 16.
